(19) Europäisches Patentamt
European Patent Office
Office européen des brevets

(11) **EP 1 566 773 B1**

(12) **EUROPEAN PATENT SPECIFICATION**

(45) Date of publication and mention
of the grant of the patent:
**19.12.2007 Bulletin 2007/51**

(51) Int Cl.:
***G06T 15/50*** (2006.01)

(21) Application number: **04003662.6**

(22) Date of filing: **18.02.2004**

(54) **Alpha blending based on a look-up table**

Alphamischung auf Basis einer Nachschlagtabelle

Mélange alpha basé sur une table de consultation

(84) Designated Contracting States:
**AT BE BG CH CY CZ DE DK EE ES FI FR GB GR
HU IE IT LI LU MC NL PT RO SE SI SK TR**

(43) Date of publication of application:
**24.08.2005 Bulletin 2005/34**

(73) Proprietor: **Harman Becker Automotive Systems
GmbH
76307 Karlsbad (DE)**

(72) Inventors:
• **Maier, Michael
78054 VS-Schwenningen (DE)**
• **Broghammer, Bernhard
78144 Tennenbronn (DE)**
• **Huber, Günther
78073 Bad-Dürrheim (DE)**

(74) Representative: **Grünecker, Kinkeldey,
Stockmair & Schwanhäusser
Anwaltssozietät
Maximilianstrasse 58
80538 München (DE)**

(56) References cited:
**WO-A-94/06111          US-A1- 2003 189 571**

**Description**

The present invention relates to an image processor capable of generating a blended image from a plurality of image layers. Specifically, the present invention relates to an image processor capable of performing alpha-blending, i.e. blending two or more image layers in accordance with an alpha layer, which specifies a transparency of image areas of one of the image layers.

Nowadays, vehicle information and entertainment systems and consumer entertainment devices which employ sophisticated graphical schemes are widely in use. Preferably, a vehicle information and entertainment system simultaneously displays car navigation data, like maps with route information overlaid thereon and direction indicator arrows, and further, auxiliary video information and image elements of a graphical user interface.

Such systems/devices typically employ graphic display controllers provided with a plurality of image layers that can be addressed by a microprocessor of the system/device. The image layers are combined by the graphic display controller into the blended output image. This layer concept allows to independently control different image elements of a complex blended image. For instance, in the case of above mentioned vehicle information and entertainment system, computer generated images, such as maps, additional video data, direction indicator arrows and elements of a graphical user interface are supplied to the different image layers and blended in order to be displayed on an on-vehicle display screen.

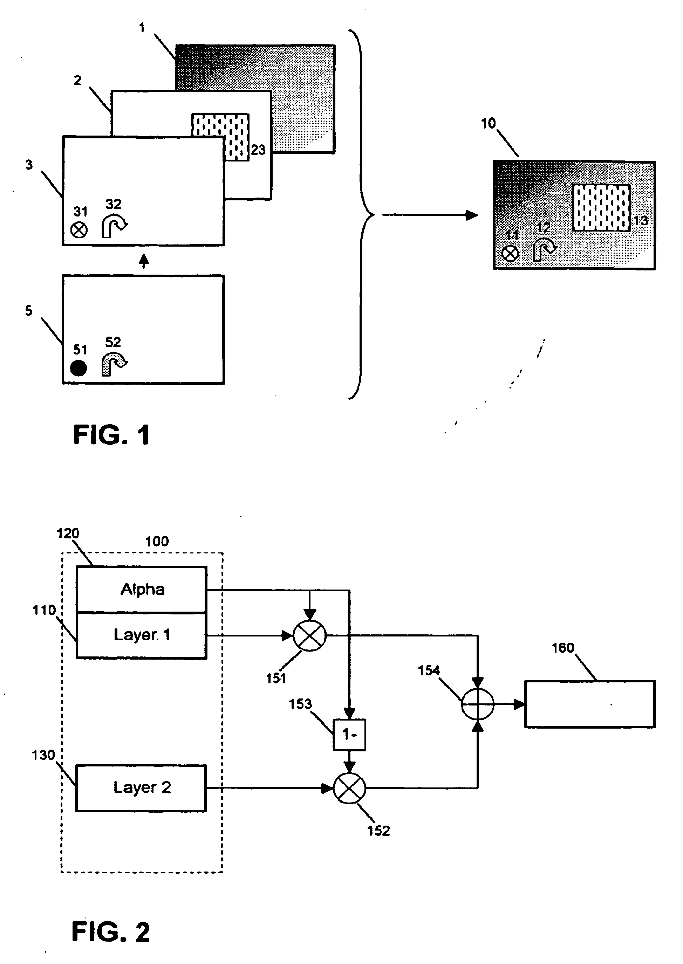

Fig. 1 depicts an example for the generation of a blended image from plural image layers. Blended image 10, in this example, includes a plurality of different image elements 11, 12, 13 visible against a background image. Blended image 10 is formed from image data of plural image layers. An image layer 1 is used as a background image, on image layer 2 an image element 23 is stored and image layer 3 holds image elements 31 and 32. Preferably, in addition to the image layers 1, 2 and 3, an $\alpha$-layer is employed. This $\alpha$-layer is associated with image layer 3, in order to assign a transparency value to image elements 31 and 32.

A common image blending - or overlay - technique is the so-called chroma-keying. In accordance with this technique, a specific color of an image is selected to be replaced by another (background) image. In this example, the image layers 1 and 2 are overlaid using chroma-keying. Specifically, all image areas of image layer 2, except for the image area of image element 23, have a uniform color. This color is set as a transparent color, such that a combined image of image layers 1 and 2 would show image element 23 before the background image being stored on image layer 1.

A more sophisticated image blending technique is the so-called the $\alpha$-blending. In accordance therewith, an image layer is provided with an $\alpha$-layer indicating - preferably for each pixel - a transparency of the image. Thus, it becomes possible to semi-transparently overlay image elements on a background image. In this example, $\alpha$-layer 5 is associated with image layer 3. For image element 31, a corresponding $\alpha$-layer element 51 specifies image element 31 to be opaque. Image element 31 is determined by $\alpha$-layer element 52 to be semi-transparent. The remaining area of image layer 3 is specified to be completely transparent. Thus, image element 11 in blended image 10 (corresponding to image element 31) is displayed completely opaque in front of the background image, while image element 12 (corresponding to image element 32) is visible in a semi-transparent manner in front of the background image.

Fig. 2 is a schematic diagram of a configuration of an image processor performing above described $\alpha$-blending technique. A memory 100 connected to the image processor or being integrated in the image processor stores a first image layer 110, a second image layer 130 and an $\alpha$-layer 120 being associated with first image layer 110. In a preferred configuration, memory 100 stores the image data as RGB data. In such a case, a color value of a blended image 160 is calculated from respective color values of the image layers 110 and 130 in accordance with the following formula:

$$R_{1/2} = \alpha \times R_1 + (1 - \alpha) \times R_2$$

In above equation, $R_{1/2}$ represents the red color value of a pixel of the blended image 160, $R_1$ the red color value of a corresponding pixel of image layer 110, and $R_2$ the red color value of a corresponding pixel of image layer 130. $\alpha$ is a transparency value from $\alpha$-layer 120 assigned to that pixel. This calculation is correspondingly performed for each color value R, G, B for each pixel of blended image 160. Arithmetic element 151, 152, 153 and 154 symbolize the multiplications, subtractions and additions, respectively, performed by the image processor in order to evaluate above specified formula.

Above calculation used in the $\alpha$-blending technique was described for images being stored in accordance with the RGB color coding standard. However, an equivalent equation can by obtained for any other color coding system, such as YUV, etc.

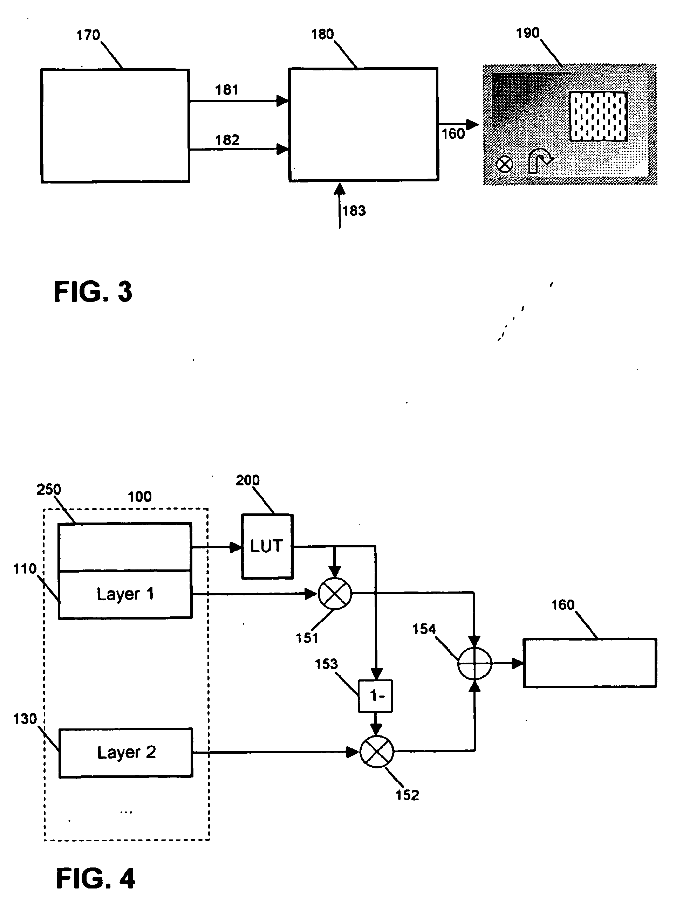

Fig. 3 depicts a schematic system configuration of a vehicle information and entertainment system or a consumer entertainment device being equipped with an image processor 180, as above described with reference to Fig. 2. A microprocessor 170 controls the image processor 180 in order to display a blended image 160 on a display screen 190. The microprocessor supplies the image processor with image data 181 or graphic commands in order to generate image objects on the different image layers of image processor 180. Further, microprocessor 170 calculates an $\alpha$-layer 182 being associated with one of the image layers and provides the $\alpha$-layer to the image processor 180. In addition, an auxiliary video signal may be input to image processor 180 to be displayed as part of the blended image 160.

An example of a display engine of a video and graphics system, which is capable of generating an image from plural layers of graphics data, is described in US-A 2003/189571. The display engine includes one or more processing elements and receives graphics data from a memory. Graphics data is further organized in the form of windows, which may be overlaid in order to obtain the output image. Graphics data from the windows and graphic layers can be blended in accordance with alpha-values that define the contribution of the respective graphic layers / windows to the output image. The alpha-values may be obtained from a colour look-up table, which stores colour signals and an associated transparency value in each entry.

Document WO-A-94/06111 describes a display apparatus, which is equipped with a mixing circuit for blending video signals with computer generated graphic signals. The degree of mixing is controlled by respective alpha signals. Colour data and values for the alpha signals are provided from a look-up table, which stores colour intensity signals and associated alpha signals at address locations selectable by the computer generated graphic signal.

So far, it has been described to utilize the $\alpha$-blending technique in a static image composition. However, $\alpha$-blending can also be used for performing dynamic effects such as fade-in/fade-out of image elements. Preferably, such effects are applied to elements of a graphical user interface to give the graphical user interface a more sophisticated appearance.

A fade-in/fade-out effect is performed by a system, as depicted in Fig. 2 and described above, as follows. In order to fade a button from invisibility to full opacity, the $\alpha$-values of the $\alpha$-layer 5, specifying the transparency of the button, need to be gradually changed from a first value indicating transparency to a second value indicating full opacity. For each gradual increase of the $\alpha$-value of the image element "button", the microprocessor 170 calculates a new $\alpha$-layer reflecting that change, and further, transmits the $\alpha$-layer 182 to image processor 180 such that the change in transparency becomes visible in the blended image 160.

It is a drawback of the above described approach for performing dynamic transparency effects, that a large amount of data needs to be generated by the microprocessor 170 and transferred to image processor 180 in order to update the $\alpha$-layer 120 each time the transparency of an image element is gradually changed. Especially in an vehicle information and entertainment system or in a consumer entertainment device, the microprocessor 170 may not have sufficient computing power in order to perform the calculation and transferring of data in real time required for a continuous update of the $\alpha$-layer.

It is therefore an object of the present invention to provide an improved approach to the $\alpha$-blending technique, which in particular allows the realization of very efficient dynamic transparency effects, such as fading.

This is achieved by the features of independent claims.

According to the present invention, the transparency of an image element can be changed by only changing the values of the transparency table.

It is a particular advantage of the present invention that changing the values of the transparency table requires low processing power. Further, the amount of data to be transferred in order to change the transparency table is much lower, than an amount of data to be transferred to change the $\alpha$-layer.

It is another advantage of the present invention, that the above specified configuration of an image processor can be implemented by only slightly changing the design of a conventional image processor capable of performing $\alpha$-blending.

Preferably, an individual $\alpha$-layer is assigned to each of plural image layers and each of the individual $\alpha$-layers includes a pointer associated with an image area of the respective image layer. In this manner, the present invention allows plural image layers to be blended by means of the $\alpha$-blending technique of the present invention, thus providing efficient dynamic blending for each of the plural image layers.

In accordance with a preferred embodiment of the present invention, a corresponding transparency table is provided for each of the individual $\alpha$-layers. Thus, each transparency table can be changed individually in order to provide individual fading effects for each assigned image layer.

According to another preferred embodiment, all individual $\alpha$-layers refer to a single transparency table. Thus, memory requirements for a system wherein plural $\alpha$-layers are employed can be reduced.

According to a further embodiment of the present invention, a variable off-set value is added to the pointer. In this manner, the transparency table may be divided into different sections and, when referring to the transparency table, a switching between the sections is performed by changing the off-set value. Thus, it becomes possible to efficiently change the transparency of plural image areas by only updating a single off-set value.

Preferably, input means receive $\alpha$-layer data including the pointer and transparency table data representing the transparency values. Accordingly, an interface for efficiently effecting dynamic transparency effects is provided.

According to another preferred embodiment of the present invention, the off-set value is input to the image processor/auxiliary processor. Thus, a more efficient interface for changing plural transparency values at a time is provided.

Preferably, the transparency table holds 16 transparency values and each transparency value has a length of four bits. Thus, the transparency table requires only 8 Byte of memory, an image layer is dividable into 16 different transparency regions, and the 4-bit length of the transparency values allows a soft change of transparency in 1/16-steps.

It is further preferred that the image area corresponds to a pixel of the image layer. Thus, α-blending is performed at a high resolution.

Preferably, the image layer has a size of 480 x 240 pixels.

In addition it is preferred, that the α-layer has a pointer for each pixel of the assigned image layer. Thus, transparency effects can be realized at a high resolution.

In a preferred embodiment of the present invention, a fade-in/fade-out effect is performed for an image object of an image layer by changing at least one transparency value in a transparency table assigned to that image layer. Thus, the transparency of an image area corresponding to the image object is gradually changed by changing the corresponding transparency value in the table. This is a very efficient manner of performing a fade-in/fade-out effect.

Further embodiments are subject-matter of dependent claims.

The present invention is now described in detail while referring to the following Figures, in which:

Fig. 1      is a schematic representation of image blending wherein a blended image is generated from plural image layers and a transparency (α-) layer,

Fig. 2      is a block diagram showing a schematic configuration of an image processor capable of performing α-blending,

Fig. 3      depicts a system configuration of a vehicle information and entertainment system or a consumer entertainment device employing an image processor as depicted in Fig. 2,

Fig. 4      depicts a schematic configuration of an image processor capable of performing α-blending in accordance with an α-layer and a transparency look-up table, in accordance with the present invention,

Fig. 5      represents a transparency look-up table for transparency values,

Fig. 6      is a schematic system configuration of a vehicle information and entertainment system or a consumer entertainment device accordance with the present invention equipped in with an image processor as depicted in Fig. 4,

Fig. 7      is a schematic configuration diagram of an image processor wherein an individual α-layer is assigned to plural of the image layers and, for each α-layer, a look-up table storing transparency values is provided,

Fig. 8      is a configuration diagram of an image processor in accordance with the present invention, wherein individual α-layers are assigned to plural of the image layers, and all α-layers refer to a single look-up table.

Fig. 9.      illustrates a fade-in effect, wherein a transparency value in the transparency look-up table is increased from full transparency to full opacity over a predetermined time interval,

Fig. 10      is a configuration diagram illustrating a partial structure of an image processor in accordance with the image processors depicted in Fig. 4, Fig. 7 and Fig. 8, further comprising a means for adding an off-set to a pointer before referring to the transparency look-up table,

Fig. 11      is a schematic representation of a transparency look-up table utilized in the image processor of Fig. 10, being sub-divided into plural address groups, each address group being accessible by adding a predetermined off-set to an initial address,

Fig. 12      depicts a system configuration of a vehicle information and entertainment system or a consumer entertainment device including a microprocessor, an image processor as depicted in Fig. 2 and an auxiliary processor which generates an α-layer including transparency values,

Fig. 13      is a flow-chart depicting a method for blending image layers in accordance with pointers from an α-layer and a look-up table storing transparency values in order to obtain a blended image, and

Fig. 14      is a flow-chart depicting a method for obtaining a blended image, which further comprises the addition of an off-set to the pointer values.

In the following, a detailed description of the present invention is given while making reference to the Figures.

As is illustrated in Fig.4, an image processor of the present invention is provided with a memory 100 which is either connected to the image processor or integrated therein. In this memory, plural image layers, such as layer 110 and layer 130 are stored to be combined in a blended image 160. At least one of the image layers, for instance image layer 110, is associated with an α-layer 250. In accordance with the present invention, the α-layer does not store transparency values (α-values) themselves but pointers to a transparency look-up table 200.

Different image areas of image layer 110 are associated with different pointers of the α-layer 250. Look-up table 200 is stored in a memory, such that transparency values thereof are stored at predetermined memory addresses. Each pointer refers to a specific address in that memory, such that by the use of transparency look-up table 200, each image area of image layer 110 can be assigned a transparency value from look-up table 200.

Having assigned a transparency value to the image areas of image layer 110, the blending process is performed in the same way as above described while referring to Fig. 2. That is, multipliers 151, 152, a subtraction means 153 and an addition means 154 perform a calculation in order to calculate the color values for each pixel of the blended image 160 in accordance with the following formula:

$$R_{1/2} = \alpha \times R_1 + (1 - \alpha) \times R_2$$

This equation is here only stated as example for the red color value of a pixel from an image in accordance with the RGB color coding system. Of course, the above described blending technique can be employed for images of other color coding systems, such as YUV, etc, by using a respective equation.

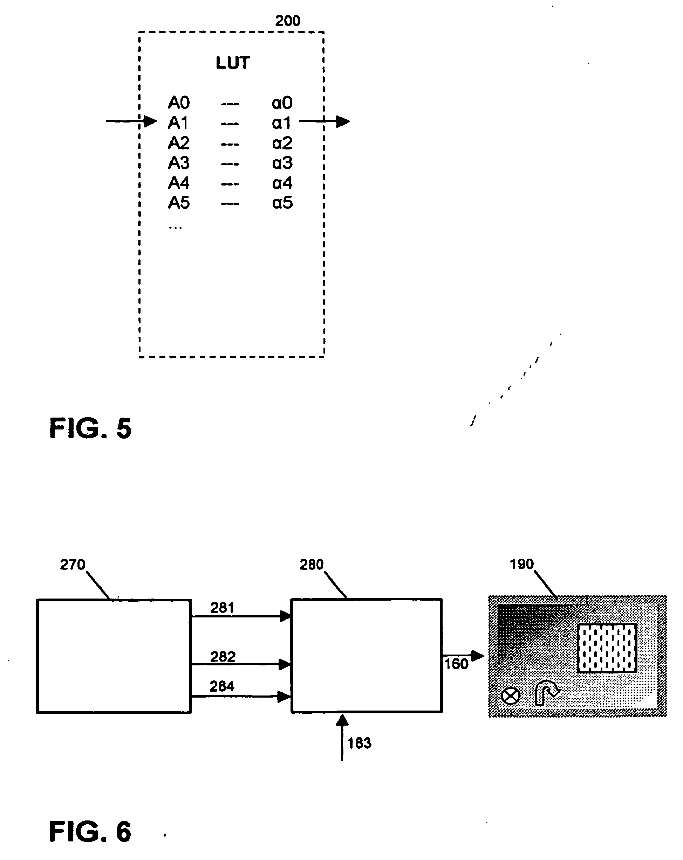

The structure of transparency look-up table 200 is illustrated by Fig. 5. Look-up table 200 stores transparency values $\alpha0$, $\alpha1$, ..., $\alpha5$, ... at corresponding addresses A0, A1, ... , A5,... of a memory. By referring to a specific address, a corresponding transparency value can be obtained. In the exemplary structure depicted in Fig. 5, transparency value $\alpha1$ is obtained by referring to memory address A1.

The present invention is particularly suitable for performing graphic effects, wherein the transparency of an image element is dynamically changed. By changing a transparency value in the look-up table, the transparency of an image element associated with that transparency value by means of a respective pointer in the α-layer can be changed effortlessly. Specifically, it is not required to change the α-layer when the transparency of a stationary image element is to be changed.

It is a particular advantage of the present invention, that changing the transparency of an image element, requires less computing power and generates less data to be transferred than changing a transparency of an image element when utilizing an image processor in accordance with Fig. 2, which requires new transparency values to be written to the α-layer.

Further, an image processor in accordance with the present invention, as shown in Fig. 4, requires only slight changes in the circuit design of an image processor as shown in Fig. 2.

Fig. 6 depicts the configuration of a vehicle information and entertainment system or a consumer entertainment device utilizing the image processor of the present invention as depicted in Fig. 4.

A microprocessor 270 controls image processor 280 in order to display a blended image 160 on the display 190. Image processor 280 is provided with image data 281 from microprocessor 270 in order to generate images and image elements on the plural image layers. Image data 281 may, in addition to pixel data, include graphic commands, such as line draw command, etc. Further, data of at least one α-layer is provided to the image processor. This data represents pointers to addresses of the memory storing the transparency look-up table in order to assign image areas of one of the image layers with transparency values from the look-up table. In addition, the transparency values of the look-up table 284 are transferred to the image processor by a microprocessor 270.

Additional input means may be provided at image processor 280, to supply one of the image layers with auxiliary video data 183.

In this configuration, the α-layer 250, storing the pointers to look-up table 200 is calculated and provided to the image processor when the composition of the blended image changes, that is when image elements are newly created, move or change in shape. If only the transparency of an image element is changed, only a corresponding value in the transparency look-up table needs to be determined by microprocessor 270 and provided to the image processor.

Thus, a dynamic change in the transparency of an image element can be effected using very low computation resources of microprocessor 270 and keeping the amount of transferred data as low as possible. Accordingly, even microprocessors having low computation power, such as microprocessors of embedded systems are able to efficiently perform dynamic transparency effects such as smooth fading of image elements.

Image data 281, α-layer data 282 and transparency values 284 for look-up table 200 can be transferred from microprocessor 270 to image processors 280 by an internal device bus. However, the present invention is not limited to this. It is also possible to have the microprocessor 270 directly write such data to an external memory connected with the image processor, which performs the image blending based on the data stored in that external memory.

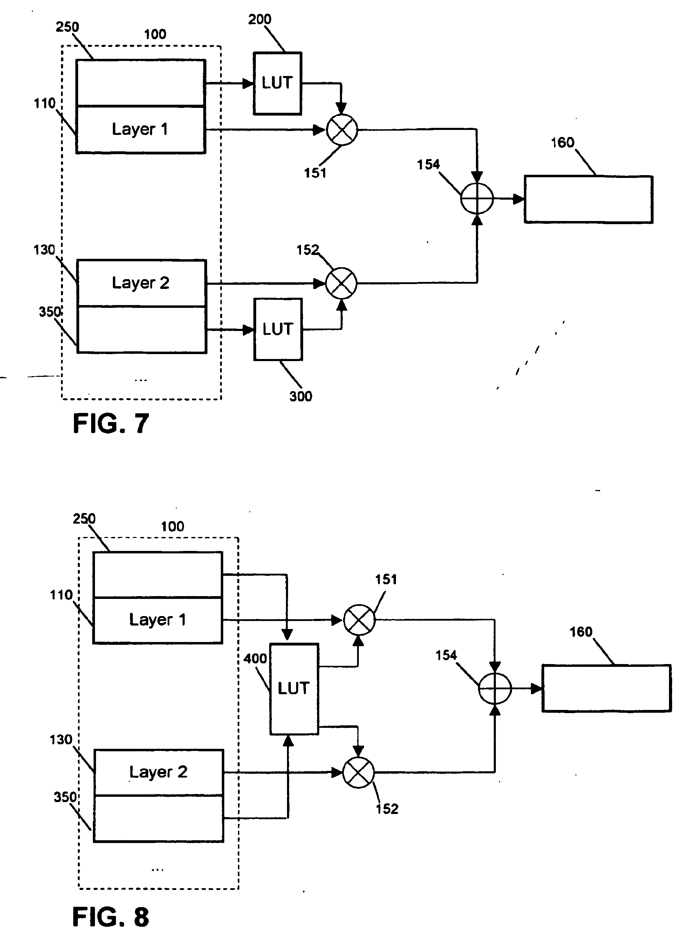

The image processor of the present invention as described above is not limited to assigning an α-layer to only a single image layer. As illustrated in Fig. 7 and Fig. 8, plural of the image layers can be each associated with an individual α-layer 250, 350, in order to allow image elements on plural image layers to be rendered transparent or semi-transparent against an underlying background image.

In the schematic system configuration of Fig. 7, at least two image layers 110, 130 are provided with individual α-layers 250, 230. Each α-layer stores pointers associated with image areas of the respective image layer. Each individual α-layer 250, 350, refers to a corresponding individual look-up table 200, 300 storing transparency values.

The calculation of the blended image 160 has to be adapted accordingly. The calculation consists of multiplying pixel color values of each of the plural image layers with corresponding transparency values (i.e. α-values), determining a contribution of a background image layer (optional), and adding the multiplied pixel values and an optional background image contribution.

Due to this configuration, alpha layers and the separate transparency look-up tables to which the pointers refer, can be separately determined and provided to the image processor. In particular, it is possible to independently change the transparency of image elements on different image layers by changing the transparency values in the respective look-up tables.

It is also possible, that the pointers from plural individual α-layers refer to a single transparency look-up table, as illustrated in Fig. 8. Fig. 8 is a system configuration of an image processor, wherein a single look-up table 400 is provided for storing the α-values which are referred to by plural α-layers 250, 350.

In order to obtain a transparency value for an image area of a specific image layer 110, a pointer associated with that image area is selected from the corresponding α-layer 250. This pointer refers to an entry in look-up table 400, such that the image area of layer 110 is assigned with a transparency value. In the same manner, image areas of image layer 130 are assigned a transparency value from look-up table 400 by employing pointers stored in α-layer 350. The calculation of the color values of the blended image 160 is the same as above described and will not be repeated.

The image processor depicted in Fig. 8 can lower the memory requirements for a look-up table, although plural of the image layers are provided with α-layers. In addition, structures for handling access to the look-up table can be implemented more efficiently, since only a single look-up table needs to be addressed.

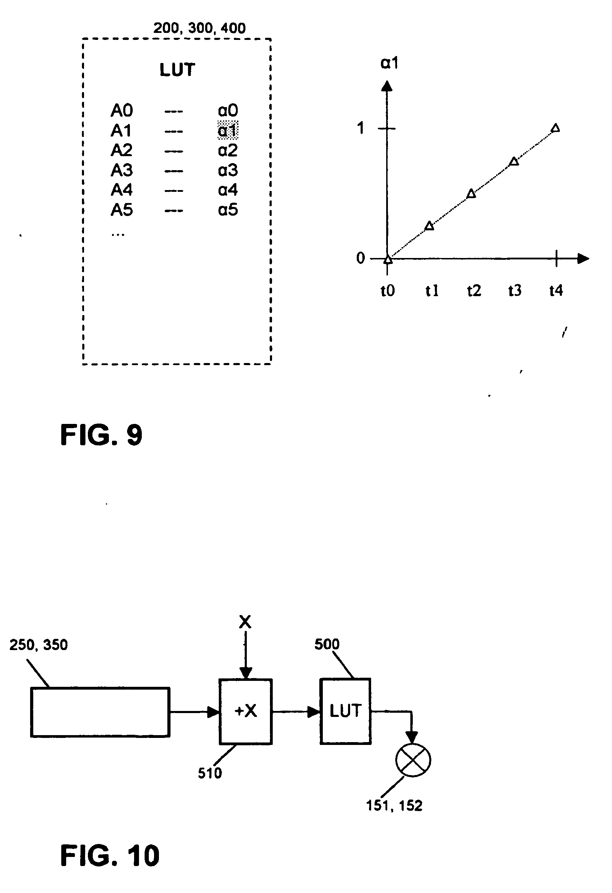

In the following, an exemplary application of any of above described image processors of the present invention will be described while referring to Fig. 9. This exemplary application relates to a smooth fade-in effect. Such a fade-in effect can be efficiently employed in a vehicle information and entertainment system or in a consumer entertainment device equipped with an image processors in accordance of the present invention.

A look-up table for transparency values such as look-up table 200, 300 or 400 is stored in a memory. The look-up table stores different transparency values at different addresses of the memory, as already mentioned. In this example, the transparency of an image element specified by the transparency value α1 is changed from full transparency to full opacity. This means, an object slowly becomes visible against a background, through several changes in transparency.

An image element, for instance, a button of a graphical user interface, such as image element 11 in Fig. 1, is faded-in, as soon as a specific control option, associated with that button, becomes available. This image element is stored as image element 31 on image layer 3, in this example. A corresponding α-layer, such as α-layer 250 or 350 includes at least one pointer, associated with the image element 31 - the button - and assigns the transparency value α1 being stored at address A1 in the respective look-up table 200, 300 or 400 to this image element.

The fade-in effect is controlled by a microprocessor which repeatedly provides a new transparency value α1 to be stored at address A1 of the look-up table. At a time t0 the transparency value α1 is 0, indicating full transparency in this example. This means that at this time, image element 31 is invisible. After a predetermined time interval, the transparency value is increased at a time point t1, such that the image element 31 becomes now slightly visible. By further increasing the transparency value α1 in regular time intervals, the visibility of the button increases, until at a time t4, the full opacity is reached, and the image element is visible against the background image as solid button.

It is needless to say, that other time behaviors of a transparency value α1 of an image element can be implemented in order to perform different fade-in effects. Further, the transparency value may be increased in smaller steps in order to achieve a smoother fade-in effect or in larger steps in order to implement a more step-like fade-in effect. In analogy to the above described fade-in effect, of course also a fade-out can be realized. Further effects, such as replacing an image element with another image element, and the like can be easily devised by the skilled person without leaving the scope of the present invention.

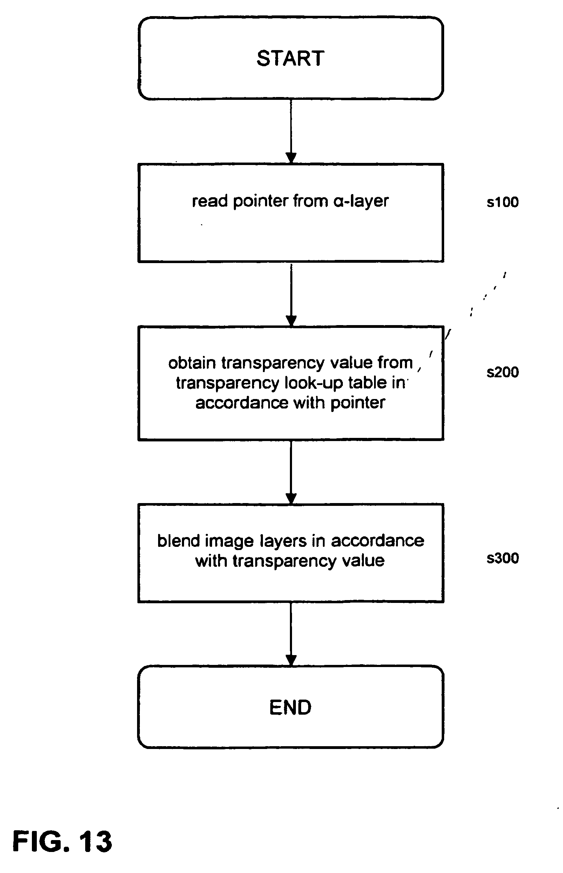

Fig. 13 is a flow-chart which depicts a method for blending images which is employed by the image processors in accordance with the present invention, described so far. At a first step s100, a pointer is read from an α-layer which is associated with one of the image layers to be blended. At a step s200, a transparency value is obtained from a transparency look-up table in accordance with the pointer read in step s100. Thus, an image layer to be blended is assigned with transparency values. Finally, in step s300, the image layers are blended in accordance with the transparency value.

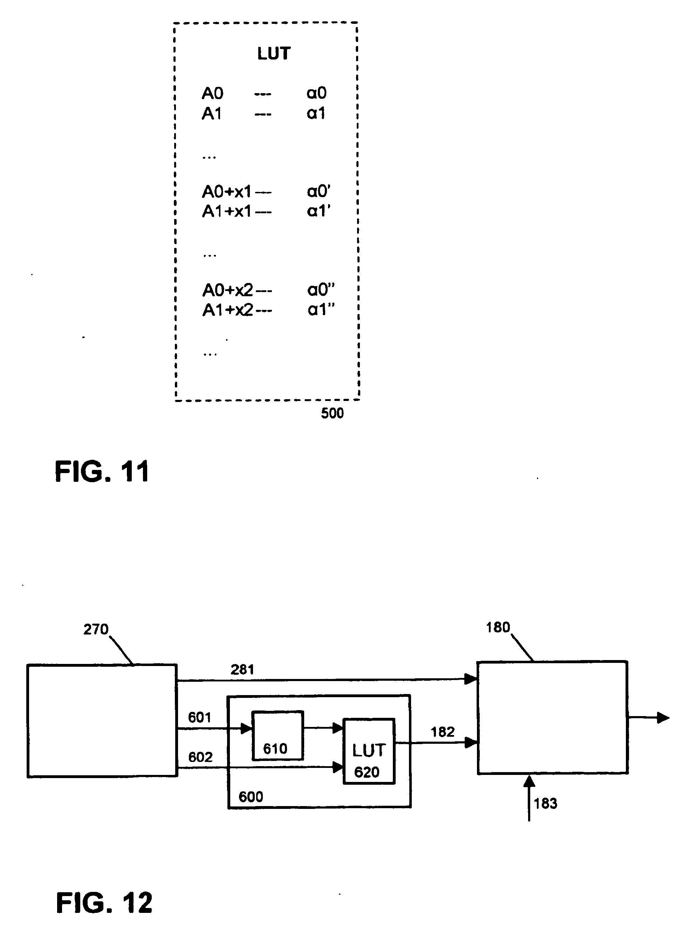

It is possible to further increase the efficiency of the process of changing transparency values in the above described image processors, by providing an additional adder which adds an off-set value to the pointers, as illustrated in Fig. 10 and Fig. 11.

Fig. 10 depicts a partial configuration of the above image processors including α-layer 250 or 350 and an adder 510 for adding an off-set value X to the pointer obtained from the α-layer. A transparency value is selected from the look-up table 500 in accordance with the pointer to which the off-set X has been added. This transparency value is assigned to the image area to which the pointer corresponds, and the calculation of the blended image color values is executed as described above by respective arithmetic means 151, 152, etc.

Fig. 11 shows a configuration of a look-up table 500 storing transparency values to be designated by a pointer to which off-set value X has been added. Preferably, this look-up table 500 is organized in several groups of α-values, being stored at address intervals in such a way, that respective groups of α-values are referred to by adding predetermined off-set values to a base address A0.

Specifically, a first group of transparency values $\alpha 0, \alpha 1, ...$ is stored at addresses A0, A1, .... These transparency values are obtained when the offset X has a value of 0. A next set of transparency values $\alpha 0', \alpha 1', ...$ is stored at addresses A0 + x1, A1 + x1, and so on. These transparency values are obtained by using x1 as off-set X. Another group of transparency values $\alpha 0'', \alpha 1'', ...$ is stored at addresses A0 + x2, A1 + x2, ... , wherein x2 is set as off-set X, in order to refer to refer to the transparency values $\alpha 0'', \alpha 1'', ...$ , etc.

With this configuration of an image processor, it becomes possible to change the transparency values of plural image elements at the same time by changing the off-set value which is added to the pointers of the α-layer. For each different off-set value, the pointers refer to another group of transparency values, such that it is not necessary to calculate transparency values at the time of performing a transparency change effect. The transparency values of the plural groups can be calculated beforehand, such that during the execution of a transparency change effect, only the off-set value has to be specified in order to refer to different groups of transparency values.

In this manner, the processing load of a microprocessor can be further lowered during the execution of the transparency change effects. Specifically, the microprocessor only needs to specify the off-set value and provide the off-set value to the image processor.

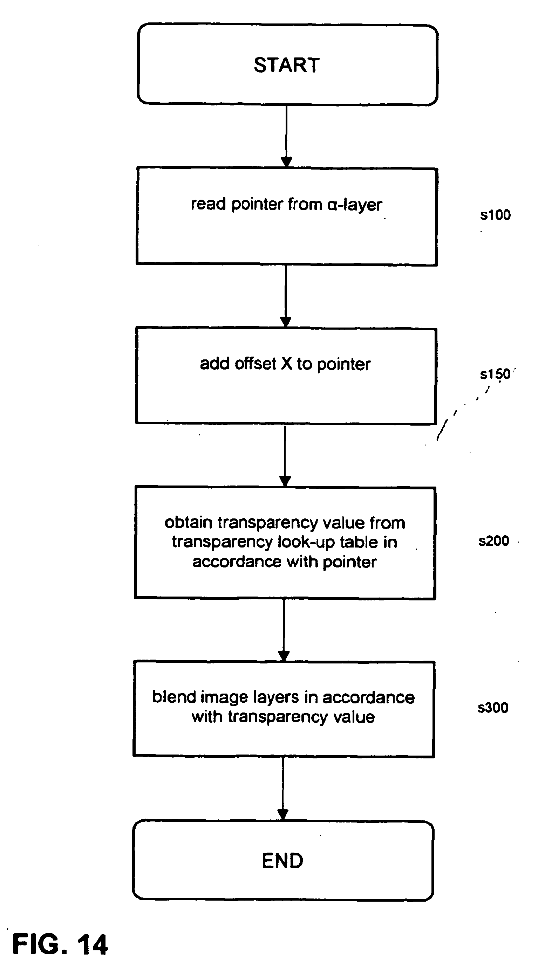

The operation of such an image processor, which has a capability of adding an off-set to pointers, is depicted in the flow-chart of Fig. 14. This operation is very similar to the flow-chart depicted in Fig. 13, which has already been described. After a pointer has been read from an α-layer in step s100, an off-set X is added to the pointer in a step s150. Thereafter, a transparency value is obtained from a transparency look-up table in accordance with the pointer to which the off-set X has been added in step s200. Finally, the image layers are blended in accordance with the transparency value obtained from the look-up table.

In the following, an example of a vehicle information and entertainment system in accordance with the present invention will be described. The basic configuration of the vehicle information and entertainment system is that of the system configuration illustrated in Fig.

6. A microprocessor 270 controls the image processor 280, which may be any of the above-described image processors of the present invention, in order to display a blended image on a display screen 190. In this example, a 7-inch LCD display having 480 x 240 pixels is employed. Accordingly, the image layers of the image processor are configured to have a size of 480 x 240 pixels. Each α-layer assigned to one of the image layers, stores a pointer for each pixel of the corresponding image layer. Thus, it is possible to assign transparency values with pixel-based accuracy.

The transparency look-up table, which is used in this example, holds sixteen transparency values. Thus, each pixel can be assigned one of sixteen different transparency values. Each transparency value is stored with a length of 4-bit. In this manner, the transparency can be specified with a graduation of sixteen different transparency values between full transparency and full opacity.

A transparency look-up table holding sixteen transparency values each having a length of 4-bit only requires eighth byte of memory thereby rendering the storage requirements for the look-up table very low. The microprocessor and the image processor are configured such that the microprocessor may directly write transparency values into a memory storing the transparency look-up table. Accordingly, very efficient access of the microprocessor to the transparency values is implemented.

So far, the present invention has been described with respect to an image processor and a method for operating an image processor. Another embodiment of the present invention relates to an auxiliary processor, that is capable of generating an α-layer including transparency values to be supplied to an image processor like the image processor illustrated by Fig. 2. From a microprocessor, the auxiliary processor receives an α-layer including pointers and a look-up table storing transparency values.

A system configuration including such an auxiliary processor is depicted in Fig. 12. Microprocessor 270 supplies image data 281 to store images and image elements on image layers of an image processor 180. Image processor 180 further employs an α-layer including transparency values in order to generate a blended image. However, microprocessor 270 provides α-layer data 601 specifying an α-layer by means of pointers referring to a look-up table, and transparency table data 602 to be stored as a look-up table.

These data 601, 602 are provided to auxiliary processor 600 to be stored as α-layer 610 (including pointers) and look-up table 620. From this data, auxiliary processor 600 generates an α-layer including a transparency value for each image area of one of the plural image layers of image processor 180. For this purpose, auxiliary processor 600 obtains a pointer associated with a specific image area from the stored α-layer, refers to transparency look-up table 620, which is storing transparency values at predetermined memory addresses, and assigns a transparency value to the specific image area in accordance with the pointer.

The auxiliary processor 600 converts α-layer data 610, representing pointers to a look-up table, and transparency table data 602, representing transparency values of a look-up table, into a conventional α-layer 182 comprising a transparency value for each image area.

In accordance with this embodiment, it is possible to decrease the processing load that is required for performing transparency change effects, by having the microprocessor supply α-layer data representing pointers to a look-up table and transparency values forming such a look-up table. When the transparency of an image element is changed, only a corresponding value of look-up table 620 needs to be updated. Thus, even embedded processors of low computing power become capable of performing transparency change effects. It is another advantage of this embodiment, that a standard graphic processor capable of performing image blending in accordance with a conventional α-layer, i.e. an α-layer including transparency values, can be utilized.

In addition, the feature of adding an off-set value to the pointers provided by the microprocessor 270 may also be employed in the auxiliary processor of this embodiment. In analogy to the subject-matter illustrated in Fig. 10, an off-set value X is added to a pointer of the α-layer 610 before referring to transparency look-up table 620. Accordingly, the same effects and advantages as above described with respect to the feature of adding an off-set value X apply to this embodiment.

Furthermore, the transparency table 620 can be configured to hold sixteen transparency values, each having a length of 4 bit. Consequently, the transparency table requires a low memory amount, while providing a sufficient number of different transparency values and a satisfactory graduation of 1/16-steps.

Preferably, the auxiliary processor is configured such that the α-layer 610 stores a pointer for each pixel of a corresponding image layer in the image processor. In this manner, α-blending can be carried out with a pixel-based accuracy.

The auxiliary processor may also be adapted to a case, wherein individual α-layers (containing transparency values) are assigned to plural image layers of image processor 180. In that case, the auxiliary processor receives data of plural α-layers, including pointers to a transparency look-up table, and data of one or plural transparency look-up tables to which the pointers refer. From this data the individual α-layers (containing transparency values) to be supplied to image processor 180 are generated. The assignment between transparency tables and α-layers can be implemented in analogy to the examples illustrated in Fig. 7 and 8.

Summarizing, the present invention provides an approach for generating a blended image from plural image layers in accordance with at least one α-layer being assigned to one of the plural image layers. In accordance with the α-layer, a transparency of image areas of the assigned image layer is indicated. The α-layer includes a pointer associated with an image area of the assigned image layer. A memory stores a transparency table including a plurality of transparency values at particular memory addresses. The pointer refers to an address of the memory wherein the transparency table is stored in order to assign a transparency value to the image area.

In accordance therewith, transparency change effects such as fading of image objects, are performed by changing a transparency value in the transparency table.

It is a particular advantage, that a microprocessor controlling the transparency change effect, only needs to determine the transparency values of the transparency table and provide these transparency values to the image processor. Thus, in comparison to a conventional approach, wherein an α-layer including transparency values is provided to the image processor, a much lower processing load is caused to the microprocessor and the transfer volume of data required to control the transparency change effect is minimal.

**Claims**

1. An image processor for generating a blended image from plural image layers, comprising:

   a memory (200) storing transparency values at different addresses, wherein the blended image being generated based on said stored transparency values,
   first input means for receiving a first image layer (130), and
   second input means for receiving a layer (250) of pointers referring to addresses of said memory (200),

   **characterized by**
   third input means for receiving a second image layer (110) associated with said layer (250) of pointers in that said pointers being associated with image areas of said second image layer (110), wherein said first and second image layers (130, 110) are blended based on the transparency values obtained from said memory (200) in accordance with said pointers.

2. An image processor in accordance with claim 1, wherein plural of said image layers (110, 130) are each associated with an individual layer (250, 350) of pointers.

3. An image processor in accordance with claim 2, comprising a plurality of transparency tables (200, 300), wherein each of said individual layer (250, 350) of pointers referring to a corresponding transparency table (200, 300).

**4.** An image processor in accordance with claim 2, wherein all of said individual layers (250, 350) of pointers refer to a single transparency table (400).

**5.** An image processor in accordance with any of claims 1 to 4, further comprising an adder (510) for adding an offset value (X) to said pointer.

**6.** An image processor in accordance with any of claims 1 to 5, further comprising fourth input means for receiving transparency table data (284) to be stored in said memory (200).

**7.** An image processor in accordance with claim 5 or 6, further comprising an offset input for receiving said offset value (X).

**8.** An image processor in accordance with any of claims 1 to 7, wherein said memory (200) holds 16 transparency values, each transparency value having a length of 4 bit.

**9.** An image processor in accordance with any of claims 1 to 8, wherein said image area corresponds to a pixel.

**10.** An image processor in accordance with any of claims 1 to 9, wherein said image layer (110, 130) has a size of 480 * 240 pixels.

**11.** An image processor in accordance with any of claims 1 to 10, wherein said layer of pointers stores a pointer for each pixel of the associated image layer (110).

**12.** An information and entertainment system including a display (190) and an image processor (280) in accordance with any of claims 1 to 11.

**13.** An information and entertainment system in accordance with claim 12, further including a microprocessor (270) for controlling said image processor (280), and being configured such that said microprocessor (270) directly, accesses said memory (200) of said image processor (280).

**14.** A method for blending plural image layers in accordance with transparency values stored at different addresses of a memory (200), comprising the steps of receiving a first image layer (130) and receiving a layer (250) of pointers referring to addresses of said memory (200),
**characterized by**
receiving a second image layer (110) associated with said layer (250) of pointers in that said pointers being associated with image areas of said second image layer (110), wherein said first and second image layers (130, 110) are blended based on the transparency values obtained from said memory (200) in accordance with said pointers.

**15.** A method in accordance with claim 14, further comprising the step of performing a fade-in/fade-out effect for an image object of said second image layer (110), by changing at least one transparency value ($\alpha 1$ - Fig.9) in said memory (200), indicating the transparency of an image area corresponding to said image object.

**16.** A method in accordance with claim 14 or 15, wherein plural of said image layers (110, 130) are each associated with an individual layer (250, 350) of pointers.

**17.** A method in accordance with claim 16, comprising a plurality of transparency tables (200, 300), wherein each of said individual layers (250, 350) of pointers referring to a corresponding transparency table (200, 300).

**18.** A method in accordance with claim 16, wherein all of said individual layers (250, 350) of pointers refer to a single transparency table (400).

**19.** A method in accordance with any of claims 14 to 18, further comprising the step of receiving transparency table data (284) to be stored in said memory (200).

**20.** A method in accordance with any of claims 14 to 19, further comprising the step of adding (s150) an offset value (X) to said pointer.

**21.** A method in accordance with claim 20, further comprising the step of receiving said offset value (X).

**22.** A method in accordance with any of claims 14 to 21, wherein said memory (200) holds 16 transparency values, each transparency value having a length of 4 bit.

**23.** A method in accordance with any of claims 14 to 22, wherein said image area corresponds to a pixel.

**24.** A method in accordance with any of claims 14 to 23, wherein said image layer (110, 130) has a size of 480 * 240 pixels.

**25.** A method in accordance with any of claims 14 to 24, wherein said layer (250, 350) of pointers stores a pointer for each pixel of the associated image layer (110).

**Patentansprüche**

**1.** Bildprozessor zum Erzeugen eines überlagerten Bildes aus mehreren Bildschichten, umfassend:

einen Speicher (200), der Transparenzwerte an verschiedenen Adressen speichert, wobei das überlagerte Bild basierend auf den gespeicherten Transparenzwerten erzeugt wird,
eine erste Eingabeeinrichtung zum Empfangen einer ersten Bildschicht (130), und
eine zweite Eingabeeinrichtung zum Empfangen einer Schicht (250) von Zeigern, die auf Adressen des Speichers (200) verweisen,

**gekennzeichnet durch**
eine dritte Eingabeeinrichtung zum Empfangen einer zweiten Bildschicht (110), die mit der Schicht (250) von Zeigern **dadurch** assoziiert ist, dass die Zeiger mit Bildbereichen der zweiten Bildschicht (110) assoziiert sind, wobei die erste und zweite Bildschicht (130, 110) basierend auf den aus dem Speicher (200) in Übereinstimmung mit den Zeigern erhaltenen Transparenzwerten überlagert werden:

2. Bildprozessor nach Anspruch 1, wobei mehrere der Bildschichten (110, 130) jeweils mit einer individuellen Schicht (250, 350) von Zeigern assoziiert sind.

3. Bildprozessor nach Anspruch 2, umfassend eine Mehrzahl von Transparenztabellen (200, 300), wobei jede der individuellen Schichten (250, 350) von Zeigern auf eine entsprechende Transparenztabelle (200, 300) verweisen.

4. Bildprozessor nach Anspruch 2, wobei alle der individuellen Schichten (250, 350) von Zeigern auf eine einzige Transparenztabelle (400) verweisen.

5. Bildprozessor nach einem der Ansprüche 1 bis 4, weiterhin umfassend einen Addierer (510) zum Addieren eines Versatzwertes (X) zu dem Zeiger.

6. Bildprozessor nach einem der Ansprüche 1 bis 5, weiterhin umfassend eine vierte Eingabeeinrichtung zum Empfangen von Transparenztabellendaten (284), die in dem Speicher (200) zu speichern sind.

7. Bildprozessor nach Anspruch 5 oder 6, weiterhin umfassend eine Versatzeingabe zum Empfangen des Versatzwertes (X).

8. Bildprozessor nach einem der Ansprüche 1 bis 7, wobei der Speicher (200) 16 Transparenzwerte enthält, wobei jeder Transparenzwert eine Länge von 4 Bit hat.

9. Bildprozessor nach einem der Ansprüche 1 bis 8, wobei der Bildbereich einem Pixel entspricht.

10. Bildprozessor nach einem der Ansprüche 1 bis 9, wobei die Bildschicht (110, 130) eine Größe von 480 * 240 Pixeln hat.

11. Bildprozessor nach einem der Ansprüche 1 bis 10, wobei die Schicht von Zeigern einen Zeiger für jedes Pixel der assoziierten Bildschicht (110) speichert.

12. Informations- und Unterhaltungssystem, welches ein Display (190) und einen Bildprozessor (280) nach einem der Ansprüche 1 bis 11 einschließt.

13. Informations- und Unterhaltungssystem nach Anspruch 12, weiterhin einschließend einen Mikroprozessor (270) zum Steuern des Bildprozessors (280), das weiterhin so konfiguriert ist, dass der Mikroprozessor (270) auf den Speicher (200) des Bildprozessors (280) direkt zugreift.

14. Verfahren zum Überlagern mehrerer Bildschichten in Übereinstimmung mit Transparenzwerten, die an verschiedenen Adressen eines Speichers (200) gespeichert sind, umfassend die Schritte des Empfangens einer ersten Bildschicht (130) und Empfangens einer Schicht (250) von Zeigern, die auf Adressen des Speichers (200) verweisen,
**gekennzeichnet durch**
Empfangen einer zweiten Bildschicht (110), die **dadurch** mit der Schicht (250) von Zeigern assoziiert ist, dass die Zeiger mit Bildbereichen der zweiten Bildschicht (110) assoziiert sind, wobei die erste und zweite Bildschicht (110, 130) basierend auf den aus dem Speicher (200) in Übereinstimmung mit den Zeigern erhaltenen Transparenzwerten überlagert werden.

15. Verfahren nach Anspruch 14, weiterhin umfassend den Schritt des Ausführens eines Einblende-/Ausblendeeffektes für ein Bildobjekt der zweiten Bildschicht (110), in dem mindestens ein Transparenzwert ($\alpha 1$ - Fig. 9) in dem Speicher (200) geändert wird, der die Transparenz eines dem Bildobjekt entsprechenden Bildbereichs angibt.

16. Verfahren nach Anspruch 14 oder 15, wobei mehrere der Bildschichten (110, 130) jeweils mit einer individuellen Schicht (250, 350) von Zeigern assoziiert sind.

17. Verfahren nach Anspruch 16, umfassend eine Mehrzahl von Transparenztabellen (200, 300), wobei jede der individuellen Schichten (250, 350) von Zeigern auf eine entsprechende Transparenztabelle (200, 300) verweisen.

18. Verfahren nach Anspruch 16, wobei alle der individuellen Schichten (250, 350) von Zeigern auf eine einzige Transparenztabelle (400) verweisen.

19. Verfahren nach einem der Ansprüche 14 bis 18, weiterhin umfassend den Schritt des Empfangens von Transparenztabellendaten (284), die in dem Speicher (200) zu speichern sind.

**20.** Verfahren nach einem der Ansprüche 14 bis 19, weiterhin umfassend den Schritt des Addierens (S150) eines Versatzwertes (X) zu dem Zeiger.

**21.** Verfahren nach Anspruch 20, weiterhin umfassend den Schritt des Empfangens des Versatzwertes (X).

**22.** Verfahren nach einem der Ansprüche 14 bis 21, wobei der Speicher (200) 16 Transparenzwerte enthält, wobei jeder Transparenzwert eine Länge von 4 Bit hat.

**23.** Verfahren nach einem der Ansprüche 14 bis 22, wobei der Bildbereich einem Pixel entspricht.

**24.** Verfahren nach einem der Ansprüche 14 bis 23, wobei die Bildschicht (110, 130) eine Größe von 480 * 240 Pixeln hat.

**25.** Verfahren nach einem der Ansprüche 14 bis 24, wobei die Schicht (250, 350) von Zeigern einen Zeiger für jedes Pixel der assoziierten Bildschicht (110) speichert.

**Revendications**

**1.** Processeur d'image pour générer une image fondue à partir d'une pluralité de couches d'images, comprenant:

une mémoire (200) qui contient des valeurs de transparence au niveau d'adresses différentes, dans lequel l'image fondue est générée sur la base desdites valeurs de transparence mémorisées;
des premiers moyens d'entrée pour recevoir une première couche d'image (130); et
des deuxièmes moyens d'entrée pour recevoir une couche (250) de pointeurs qui font référence à des adresses de ladite mémoire (200),

**caractérisé par**:

des troisièmes moyens d'entrée pour recevoir une deuxième couche d'image (110) associée à ladite couche (250) de pointeurs, en ce que lesdits pointeurs sont associés à des zones d'image de ladite deuxième couche d'image (110), dans lequel lesdites première et deuxième couches d'images (130, 110) sont fondues sur la base des valeurs de transparence obtenues à partir de ladite mémoire (200) en accord avec lesdits pointeurs.

**2.** Processeur d'image selon la revendication 1, dans lequel une pluralité desdites couches d'images (110, 130) sont associées chacune à une couche individuelle (250, 350) de pointeurs.

**3.** Processeur d'image selon la revendication 2, comprenant une pluralité de tables de transparence (200, 300), dans lequel chacune desdites couches individuelles (250, 350) de pointeurs fait référence à une table de transparence correspondante (200, 300).

**4.** Processeur d'image selon la revendication 2, dans lequel la totalité desdites couches individuelles (250, 350) de pointeurs fait référence à une table de transparence unique (400).

**5.** Processeur d'image selon l'une quelconque des revendications 1 à 4, comprenant par ailleurs un additionneur (510) pour ajouter une valeur de décalage (X) au dit pointeur.

**6.** Processeur d'image selon l'une quelconque des revendications 1 à 5, comprenant par ailleurs quatre moyens d'entrée pour recevoir des données de table de transparence (284) destinées à être enregistrées dans ladite mémoire (200).

**7.** Processeur d'image selon la revendication 5 ou 6, comprenant par ailleurs une entrée de décalage pour recevoir ladite valeur de décalage (X).

**8.** Processeur d'image selon l'une quelconque des revendications 1 à 7, dans lequel ladite mémoire (200) contient 16 valeurs de transparence, chaque valeur de transparence ayant une longueur de 4 bits.

**9.** Processeur d'image selon l'une quelconque des revendications 1 à 8, dans lequel ladite zone d'image correspond à un pixel.

**10.** Processeur d'image selon l'une quelconque des revendications 1 à 9, dans lequel ladite couche d'image (110, 130) a une dimension de 480 * 240 pixels.

**11.** Processeur d'image selon l'une quelconque des revendications 1 à 10, dans lequel ladite couche de pointeurs contient un pointeur pour chaque pixel de la couche d'image associée (110).

**12.** Système d'information et de divertissement comprenant un afficheur (190) et un processeur d'image (280) selon l'une quelconque des revendications 1 à 11.

**13.** Système d'information et de divertissement selon la revendication 12, comprenant par ailleurs un microprocesseur (270) pour commander ledit processeur d'image (280), et configuré de telle sorte que ledit microprocesseur (270) accède directement à ladite mémoire (200) dudit processeur d'image (280).

**14.** Procédé permettant de fondre une pluralité de couches d'images en accord avec des valeurs de transparence mémorisées au niveau de différentes adresses d'une mémoire (200), comprenant les étapes consistant à recevoir une première couche d'image (130) et à recevoir une couche (250) de pointeurs qui font référence à des adresses de ladite mémoire (200),
**caractérisé par** les étapes consistant à:

recevoir une deuxième couche d'image (110) associée à ladite couche (250) de pointeurs, en ce que lesdits pointeurs sont associés à des zones d'image de ladite deuxième couche d'image (110), dans lequel lesdites première et deuxième couches d'images (130, 110) sont fondues sur la base des valeurs de transparence obtenues à partir de ladite mémoire (200) en accord avec lesdits pointeurs.

**15.** Procédé selon la revendication 14, comprenant par ailleurs l'étape consistant à réaliser un effet fondu enchaîné pour un objet d'image de ladite deuxième couche d'images (110), en changeant au moins une valeur de transparence ($\alpha$1 - Figure 9) dans ladite mémoire (200), qui indique la transparence d'une zone d'image correspondant au dit objet d'image.

**16.** Procédé selon la revendication 14 ou 15, dans lequel une pluralité desdites couches d'images (110, 130) sont associées chacune à une couche individuelle (250, 350) de pointeurs.

**17.** Procédé selon la revendication 16, comprenant une pluralité de tables de transparence (200, 300), dans lequel chacune desdites couches individuelles (250, 350) de pointeurs fait référence à une table de transparence correspondante (200, 300).

**18.** Procédé selon la revendication 16, dans lequel la totalité desdites couches individuelles (250, 350) de pointeurs fait référence à une table de transparence unique (400).

**19.** Procédé selon l'une quelconque des revendications 14 à 18, comprenant par ailleurs l'étape consistant à recevoir des données de table de transparence (284) destinées à être enregistrées dans ladite mémoire (200).

**20.** Procédé selon l'une quelconque des revendications 14 à 19, comprenant par ailleurs l'étape consistant à ajouter (s150) une valeur de décalage (X) au dit pointeur.

**21.** Procédé selon la revendication 20, comprenant par ailleurs l'étape consistant à recevoir ladite valeur de décalage (X).

**22.** Procédé selon l'une quelconque des revendications 14 à 21, dans lequel ladite mémoire (200) contient 16 valeurs de transparence, chaque valeur de transparence ayant une longueur de 4 bits.

**23.** Procédé selon l'une quelconque des revendications 14 à 22, dans lequel ladite zone d'image correspond à un pixel.

**24.** Procédé selon l'une quelconque des revendications 14 à 23, dans lequel ladite couche d'image (110,130) a une dimension de 480 * 240 pixels.

**25.** Procédé selon l'une quelconque des revendications 14 à 24, dans lequel ladite couche (250, 350) de pointeurs contient un pointeur pour chaque pixel de la couche d'image associée (110).

**FIG. 1**

**FIG. 2**

**FIG. 3**

**FIG. 4**

200

LUT

| | | |
|---|---|---|
| A0 | — | α0 |
| A1 | — | α1 |
| A2 | --- | α2 |
| A3 | — | α3 |
| A4 | --- | α4 |
| A5 | — | α5 |
| ... | | |

**FIG. 5**

270      280      190

281

282

284

160

183

**FIG. 6**

FIG. 7

FIG. 8

200, 300, 400

**LUT**

A0    —    α0
A1    —    α1
A2    —    α2
A3    —    α3
A4    —    α4
A5    —    α5
...

## FIG. 9

## FIG. 10

LUT

A0 --- α0
A1 -- α1

...

A0+x1 — α0'
A1+x1 — α1'

...

A0+x2 — α0"
A1+x2 — α1"

...

500

**FIG. 11**

270   281   180

601
602   610   LUT 620   182   183
600

**FIG. 12**

START

read pointer from α-layer                          s100

obtain transparency value from
transparency look-up table in
accordance with pointer                            s200

blend image layers in accordance
with transparency value                            s300

END

## FIG. 13

```
        ┌─────────────────────┐
        │                     │
        │       START         │
        │                     │
        └─────────────────────┘
                  │
                  ▼
        ┌─────────────────────┐
        │                     │
        │ read pointer from   │        s100
        │ α-layer             │
        │                     │
        └─────────────────────┘
                  │
                  ▼
        ┌─────────────────────┐
        │                     │
        │ add offset X to     │        s150
        │ pointer             │
        │                     │
        └─────────────────────┘
                  │
                  ▼
        ┌─────────────────────┐
        │ obtain transparency │
        │ value from          │
        │ transparency look-up│        s200
        │ table in            │
        │ accordance with     │
        │ pointer             │
        └─────────────────────┘
                  │
                  ▼
        ┌─────────────────────┐
        │ blend image layers  │
        │ in accordance       │        s300
        │ with transparency   │
        │ value               │
        └─────────────────────┘
                  │
                  ▼
        ┌─────────────────────┐
        │                     │
        │        END          │
        │                     │
        └─────────────────────┘
```

## FIG. 14

**REFERENCES CITED IN THE DESCRIPTION**

**Patent documents cited in the description**

- US 2003189571 A

- WO 9406111 A